# EUROPEAN PATENT APPLICATION

(11) **EP 3 582 234 A1**
(43) Date of publication of application: **18.12.2019**
(21) Application number: 18751150.6
(22) Date of filing: 06.02.2018
(51) Int. Cl.: H01B 7/42, H01B 7/00

(54) **POWER SUPPLY CABLE, AND POWER SUPPLY CABLE WITH CONNECTOR**

(30) Priority: 07.02.2017 JP 2017020796
(71) Applicant: Fujikura Ltd., Tokyo 135-8512 (JP)
(72) Inventor: SATO, Nozomi, Sakura-shi Chiba 285-8550 (JP)
(74) Representative: Plasseraud IP
(86) International application number: PCT/JP2018/003982
(87) International publication number: WO 2018/147263

(57) **Abstract**

The present invention provides a power supply cable including a plurality of power lines each having a cooling pipe and a conductor that surrounds the cooling pipe, in which each cooling pipe that is included in each of power lines used in the same polarity is connected to each other at a first end of the power supply cable.

## Description

### Technical Field

The present invention relates to a power supply cable and a connector-equipped power supply cable.

Priority is claimed on Japanese Patent Application No. 2017-020796, filed on February 7, 2017, the content of which is incorporated herein by reference.

### Background Art

In the related art, a power supply cable as disclosed in Patent Document 1 has been known. The power supply cable is internally provided with a plurality of power lines. Each power line includes a cooling pipe disposed at the center, a conductor surrounding the cooling pipe, and an insulator covering the conductor. The power supply cable of Patent Document 1 can limit the amount of heat generated by the conductor by circulating a liquid refrigerant through the cooling pipe, and can limit an increase in temperature of the entire power supply cable.

### Citation List

### Patent Literature

[Patent Document 1] Japanese Unexamined Patent Application, First Publication No. 2012-164478

### Summary of Invention

### Technical Problem

Regarding the power supply cable having a plurality of power lines including the cooling pipes inside as the above-described in Patent Document 1 (refrigerant circulation system), the inventor of the present invention considers a technique of sending the refrigerant from the refrigerant cooling device that cools and sends the refrigerant to the inside of the cooling pipe of the first power line, and circulating the refrigerant back to the refrigerant cooling device through the cooling pipe of the second power line.

The power supply cable 1 used to supply power to a power supply target such as a battery for an electric vehicle has a power line used at a positive potential and a power line used at a negative potential to form a power supply circuit for supplying power by direct current between a charger body and the power supply target.

In the case of realizing the above-described refrigerant circulation system for a power supply cable having a plurality of power lines including a cooling pipe, the following configuration (hereinafter, also referred to as a configuration under consideration) is considered. On the first end side of the power supply cable, the cooling pipe of the power line used at the positive potential and the cooling pipe of the power line used at the negative potential are connected to each other. Further, these cooling pipes are respectively connected to the refrigerant inlet and the refrigerant outlet of the refrigerant cooling device on the second end side of the power supply cable.

In the configuration under consideration, the refrigerant sent to the cooling pipe connected to the refrigerant outlet is returned to the refrigerant cooling device through the cooling pipe connected to the refrigerant inlet.

In the above-described configuration under consideration, for example, a cooling pipe made entirely of resin can be employed.

However, in the configuration under consideration, liquid refrigerant (hereinafter also referred to as coolant) from the cooling pipe of the power line used at positive potential may be leaked due to the application of an excessive external force to the power supply cable. When the leaked coolant flows through the gap existing between the cooling pipe and the conductor of the power line, the coolant may flow along the outer peripheral surface of the cooling pipe and may be transferred to the cooling pipe of the power line used at a negative potential. In that case, an electrical short circuit may occur through the leaked coolant between the positive potential power line and the negative potential power line.

Further, the outer peripheral surface of the cooling pipe is cooled by the refrigerant flowing inside, so dew condensation may occur therein, depending on the temperature, humidity, and the like of the installation environment. Therefore, in the configuration under consideration, there is a possibility that a short circuit between the power lines may occur through the condensed water on the outer peripheral surface of the cooling pipe which is generated by the dew condensation.

The present invention has been made in view of such circumstances, and an object thereof is to prevent an electrical short circuit between power lines through a cooling pipe.

### Solution to Problem

In order to solve the above problems, a power supply cable according to a first aspect of the present invention includes a plurality of power lines each having a cooling pipe and a conductor that surrounds the cooling pipe, in which each cooling pipe that is included in each of power lines used in the same polarity is connected to each other at a first end of the power supply cable.

The power supply cable further includes a first communication cord having a first signal line and a coating that accommodates the first signal line inside, in which the plurality of power lines may include a positive power line used at a positive potential and a negative power line used at a negative potential, and in a cross-sectional view, the positive power line and the negative power line may be disposed so as to sandwich the first communication cord therebetween in a radial direction.

The power supply cable further includes a second communication cord having a second signal line and an exterior material that covers the second signal line, in which in the cross-sectional view, the plurality of power lines may be disposed on each of the two sides of a columnar section which includes the first communication cord and the second communication cord, and the plurality of power lines sandwich the columnar section therebetween in the radial direction.

A connector-equipped power supply cable according to a second aspect of the present invention includes the power supply cable; and a connector that is provided at the first end of the power supply cable, and is connected to a power supply target.

A power supply cable according to a third aspect of the present invention includes a plurality of power lines each having a cooling pipe, in which the cooling pipe included in one power line of the plurality of power lines is connected to the cooling pipe included in the other power line of the plurality of power lines, and the one power line and the other power line are used in the same polarity with each other.

### Advantageous Effects of Invention

According to the above aspects of the present invention, an electrical short circuit between power lines through the cooling pipes can be prevented.

### Brief Description of Drawings

FIG. 1 is a cross-sectional view showing a configuration of a power supply cable of the present embodiment.
FIG. 2 is a schematic view of a connector-equipped power supply cable provided with the power supply cable of FIG. 1.
FIG. 3 is a schematic view of a connection state of cooling pipes of power lines of the power supply cable of FIG. 1.

### Description of Embodiments

Hereinafter, the configuration of a power supply cable and a connector-equipped power supply cable according to the present embodiment will be described with reference to the drawings.

First, the power supply cable will be described.

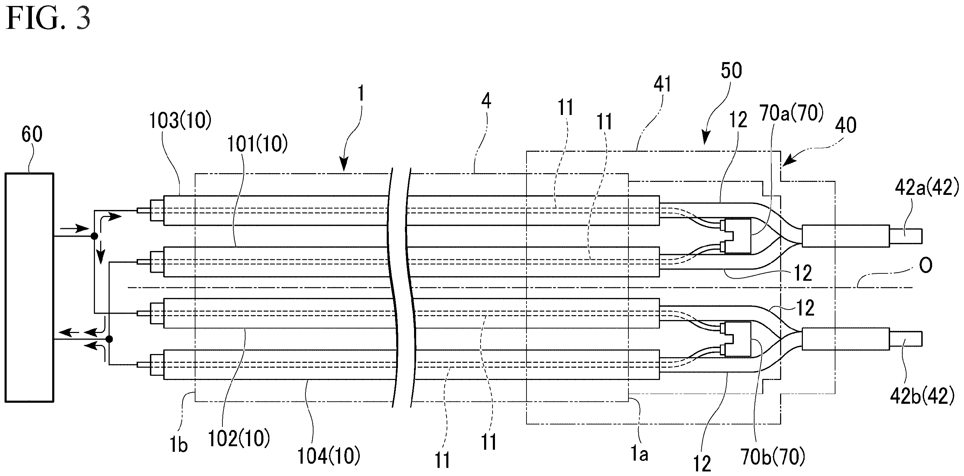

The power supply cable 1 according to the present embodiment has a first end 1a and a second end 1b (see FIG. 3), and includes a power line for power transmission and a signal line for signal transmission. The power supply cable 1 has a cooling function to suppress heat generation when a large current flows through the power line.

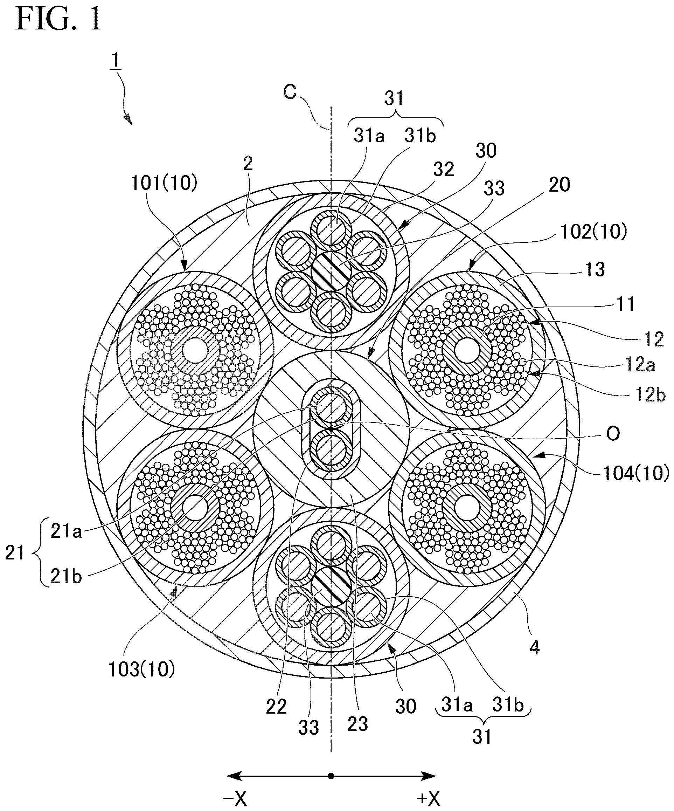

As shown in FIG. 1, a power supply cable 1 includes a plurality of power lines 10, a first communication cord 20, a plurality of second communication cords 30, filling 2, and a sheath 4. The plurality of power lines 10, the first communication cord 20, the plurality of second communication cords 30, and the filling 2 are accommodated in the sheath 4. In the present embodiment, the power supply cable 1 includes four power lines 10, one first communication cord 20, and two second communication cords 30.

The power supply cable 1 is used, for example, when electrically connecting the charger body and the power supply target and supplying power to the power supply target. The power supply target may be, for example, a battery of an electric vehicle (vehicle). In the case of quickly charging the battery for an electric vehicle using the power supply cable 1, for example, a large current of 250 A or more flows in the power line 10. When such a large current flows in the power supply cable 1, the power line 10 generates heat, which may make it difficult for the user to touch the power supply cable 1 and handle it. Therefore, it is necessary to keep the surface temperature of the power supply cable 1 below a predetermined temperature.

Further, the power supply cable 1 is accommodated in the charger body by being partially wound or reeled when not in use. At the time of use, the power supply cable 1 is released from the accommodated state and connected to the power supply target. That is, the power supply cable 1 is repeatedly wound and released for use. Therefore, durability against friction, durability against bending, flexibility, and the like are required for the power supply cable 1.

### <Direction Definition>

Here, in the present embodiment, a direction along the central axis O of the power supply cable 1 is referred to as a longitudinal direction. Further, in the cross-sectional view orthogonal to the central axis O, a direction orthogonal to the central axis O is referred to as a radial direction, and a direction revolving around the central axis O is referred to as a circumferential direction.

Further, in the cross-sectional view shown in FIG. 1, one side with respect to a symmetry axis C described later is referred to as -X side, and the other side with respect to the symmetry axis C is +X side.

### (First Communication Cord)

The first communication cord 20 is used for communication between, for example, a vehicle as a power supply target and a charger body. In the cross-sectional view, the first communication cord 20 is disposed at the center of the power supply cable 1. In the cross-sectional view, the first communication cord 20 is surrounded by four power lines 10 and two second communication cords 30.

The first communication cord 20 includes a plurality (two) of first signal lines 21, a tape 22 that wraps around the first signal lines 21, and a coating 23 covering the tape 22.

The tape 22 and the coating 23 are each formed of an electrically insulating material.

The number (two) of first signal lines 21 included in the first communication cord 20 shown in FIG. 1 is smaller than the number (six) of second signal lines 31 included in the second communication cord 30.

However, the number of first signal lines 21 included in the first communication cord 20 and the number of second signal lines 31 included in the second communication cord 30 can be changed as appropriate. That is, the number of the first signal lines 21 included in the first communication cord 20 is equal to or greater than the number of the second signal lines 31 included in the second communication cord 30.

The first communication cord 20 has flexibility. In the first signal line 21, the conductor 21a is covered with the insulator 21b. The insulator 21b is formed of an insulating resin. The plurality of first signal lines 21 is accommodated in the coating 23 in a state of being integrally wound with the tape 22.

In the present embodiment, the two first signal lines 21 are accommodated in the coating 23 in a twisted state. One first communication cord 20 is a so-called twisted pair cable. Therefore, the adjusting range in which the pitch for twisting the two first signal lines 21 can be wide, and an optimum pitch can be selected from the viewpoint of noise during communication.

The thickness of the coating 23 (cord coating) of the first communication cord 20 is larger than the thickness of the tape 22. The thickness of the coating 23 is larger than the thickness of the tape 32 to be described later of the second communication cord 30. The outer diameter of the first communication cord 20 can be adjusted by changing the thickness of the coating 23. By changing the thickness of the coating 23, it is possible to easily adjust the positions of the plurality of second communication cords 30 and the plurality of power lines 10 in the radial direction. Thereby, the plurality of second communication cords 30 and the plurality of power lines 10 can be brought into contact with the coating 23 in the radial direction. Further, the second communication cord 30 and the power line 10 adjacent in the circumferential direction, or the two power lines 10 adjacent in the circumferential direction can be brought into contact with each other in the circumferential direction.

In this way, by properly adjusting the thickness of the coating 23, a plurality of second communication cords 30 and a plurality of power lines 10 can be positioned around the first communication cord 20 in appropriate positions and a well-balanced manner.

### (Second Communication Cord)

The second communication cord 30 is disposed radially outward of the first communication cord 20. In the cross-sectional view shown in FIG. 1, two second communication cords 30 are disposed on both sides of the first communication cord 20 in the radial direction. The two second communication cords 30 are disposed to sandwich the first communication cord 20 from both sides in the radial direction.

The outer diameter of the second communication cord 30 is substantially equal to the outer diameters of the first communication cord 20 and the power line 10. The outer diameters of the two second communication cords 30 are substantially equal to each other.

The second communication cord 30 has flexibility. The second communication cord 30 includes six second signal lines 31, and a tape (exterior material) 32 that wraps around the six second signal lines 31. Each second signal line 31 is used for controlling the locking mechanism of the connector 40, for the power source line of an LED to be lighted at the time of charging, or for the signal line of the temperature sensor when the connector 40 is provided with a temperature sensor, to be described later. In addition, a part of the second signal line 31 may be used as an auxiliary power supply line to the power supply target.

Each second signal line 31 is helically twisted around the core material 33. The core material 33 is formed of rubber or the like in a linear shape, and has flexibility. Further, the plurality of second signal lines 31 are wrapped in the tape 32. The second signal line 31 has a configuration in which the conductor 31a is covered with an insulator 31b. The outer diameter of the second signal line 31 of the second communication cord 30 may be substantially equal to the outer diameter of the first signal line 21 of the first communication cord. Alternatively, the outer diameter of the second signal line 31 may be different from the outer diameter of the first signal line 21.

### (Power Line)

The power line 10 has a cooling pipe 11, a conductor 12, and an insulator 13. The power line 10 has flexibility.

The cooling pipe 11 is disposed at the center of the power line 10 in a cross sectional view.

The cooling pipe 11 is a flexible tube made of synthetic resin. The cooling pipe 11 is in contact with the conductor 12 which generates heat by energization. Therefore, the cooling pipe 11 is required to have heat resistance. For the cooling pipe 11, for example, a synthetic resin which has excellent heat resistance and insulation (electrical insulation, the same applies hereinafter) such as nylon 12 can be suitably adopted.

Since the nylon 12 is also excellent in flexibility and mechanical strength, it is suitable as a member constituting the power supply cable 1 which is required to have flexibility and mechanical durability. In addition to nylon 12, as the material of the cooling pipe 11, for example, other synthetic resins, such as a silicone resin, a fluorine resin, polyurethane, and polyolefin may be used.

When power is supplied to the power supply target using the power supply cable 1, the refrigerant flows through the cooling pipe 11. The refrigerant is a liquid refrigerant such as water, oil or antifreeze, or a gas refrigerant (refrigerant gas) such as air or carbon dioxide.

As shown in FIG. 3, each cooling pipe 11 is connected to the refrigerant cooling device 60 at the second end 1b of the power supply cable 1. The refrigerant cooling device 60 includes a chiller for cooling the refrigerant, and a pump for sending the refrigerant. In the power supply cable 1 of this embodiment, the plurality of cooling pipes 11 are filled with the refrigerant, and the refrigerant flows in the cooling pipe 11 by the refrigerant cooling device 60.

The conductor 12 surrounds the cooling pipe 11. For example, a direct current of 250 A or more flows through the conductor 12 in the present embodiment. The conductor 12 includes a plurality of conductor wires 12b, and are formed by plurality of conductor wires 12b twisted together around the cooling pipe 11. In the present embodiment, the conductor wire 12b is formed by twenty one strands 12a which are bundled and twisted together. The conductor 12 is formed by six conductor wires 12b which are twisted together around the cooling pipe 11. Thus, the conductor 12 is evenly disposed around the cooling pipe 11. Each conductor wire 12b is provided in contact with the outer peripheral surface of the cooling pipe 11. For example, a tin plated soft copper wire can be used as each strand 12a constituting the conductor wire 12b.

The number of conductor wires 12b constituting the conductor 12 and the number of strands 12a constituting the conductor wire 12b can be changed as appropriate.

The insulator 13 covers (surrounds) the conductor 12. As the material of the insulator 13, for example, EP rubber can be used.

The plurality of power lines 10 are disposed around the first communication cord 20. In the cross-sectional view shown in FIG. 1, a line passing through the central portion of the first communication cord 20 and the central portions of the two second communication cords 30 disposed on both sides of the first communication cord 20 in the radial direction is a symmetry axis C. The four power lines 10 are disposed in line symmetry with respect to the symmetry axis C. The four power lines 10 are disposed two each on both sides (-X side and + X side) of the symmetry axis C. A columnar section which includes the first communication cord 20 and the two second communication cords 30 disposed on both sides of the first communication cord 20 is referred to as the communication cord columnar section. That is, the four power lines 10 are disposed two each on both sides of the communication cord columnar section. In the circumferential direction, the two power lines 10 adjacent to each other in the circumferential direction are respectively located between the second communication cords 30 on both sides of the first communication cord 20. Each power line 10 is disposed in contact with the first communication cord 20 and the second communication cord 30.

In this way, the plurality of power lines 10, the first communication cord 20, and the plurality of second communication cords 30 are disposed such that the cross section of the power supply cable 1 is line-symmetry with respect to the symmetry axis C. Further, in the present embodiment, the plurality of power lines 10, the first communication cord 20, and the plurality of second communication cords 30 are disposed so as to be point symmetric about the central axis O in the cross section of the power supply cable 1. Thus, it is possible to suppress the occurrence of temperature unevenness in the power supply cable 1 at the time of energization, to prevent the surface of the sheath 4 from locally becoming high temperature, and to further enhance safety.

The outer diameter of the power line 10 is substantially equal to the outer diameters of the first communication cord 20 and the second communication cord 30. The outer diameters of the four power lines 10 are substantially equal to each other.

In the cross-sectional view, two power lines 10 adjacent to each other in the circumferential direction are referred to as a pair of power lines 10. That is, in FIG. 1, the first power line 101 and the third power line 103, and the second power line 102 and the fourth power line 104 are each a pair of power lines 10. One of the cooling pipes 11 included in the pair of the power lines 10 is an outward path of the refrigerant, and the other is a return path of the refrigerant. Further, in the pair of power lines 10 adjacent to each other, both power lines are used in the same polarity with each other. That is, currents having the same direction flow through the conductors 12 included in the pair of power lines 10.

### (Sheath)

The sheath 4 integrally covers the plurality of power lines 10, the first communication cord 20, the plurality of second communication cords 30, and the filling 2. The plurality of power lines 10 and the plurality of second communication cords 30 are helically twisted together around the first communication cord 20. The first communication cord 20, the plurality of power lines 10, and the plurality of second communication cords 30 are accommodated in the sheath 4 together with the filling 2. The sheath 4 can be formed by extrusion molding or the like using, for example, chloroprene rubber or the like.

### (Filling)

The space around the plurality of power lines 10, the first communication cord 20, and the plurality of second communication cords 30 are filled with the filling 2. The position of each member can be stabilized by the filling 2, when each member is covered with the sheath 4. Further, the filling 2 functions as a cushioning material for protecting the power line 10 and the communication cords 20, 30 from being damaged, for example, when the power supply cable 1 is stepped on the vehicle body or the like. For example, Tetron yarn can be used as the filling 2.

Next, the connector and the connector-equipped power supply cable will be described.

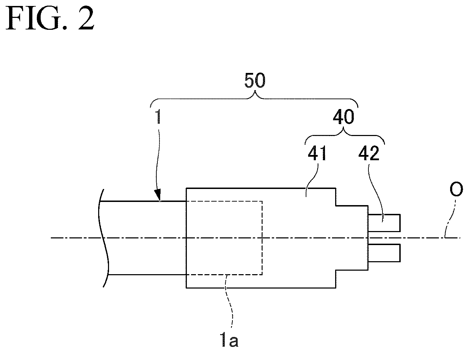

FIG. 2 is a schematic view of the connector-equipped power supply cable 50 having a connector 40 attached to a power supply target. As shown in FIG. 2, the connector-equipped power supply cable 50 includes a power supply cable 1, and a power supply connector (hereinafter simply referred to as a connector) 40. The connector 40 is disposed at the first end 1a of the power supply cable 1. The connector 40 is connected to the power supply target.

The connector 40 includes a case 41 and a plurality of connector terminals 42. In the example of FIG. 2, the number of connector terminals 42 is two.

The first end 1a of the power supply cable 1 is accommodated in the case 41.

The conductor 12 of each power line 10 is electrically connected to the connector terminal 42 of the connector 40 on the first end 1a side of the power supply cable 1. At the second end 1b of the power supply cable 1, the conductor 12 of each power line 10 is connected to a charger body (not shown).

The connector-equipped power supply cable 50 supplies the power output from the charger body to the power supply target through the power line 10 of the power supply cable 1 and the connector terminal 42 of the connector 40. A direct current flows from the charger body to the power supply target through the conductor 12 of the power line 10 and the connector terminal 42 of the connector 40.

The power supply cable 1 has power lines used at a positive potential (positive polarity) and a negative potential (negative polarity) to form a power supply circuit for supplying power by direct current between the charger body and the power supply target.

In the cross-sectional view shown in FIG. 1, there are two sides separated by the communication cord columnar section (symmetry axis C) of the power supply cable 1. The left side (-X side) in the radial direction is the first side, and the right side (+X side) is the second side. Among the four power lines 10, two power lines 10 (the first power line 101 and the third power line 103) used with positive potential (positive polarity, the same applies hereinafter) are disposed on the first side (-X side). Two power lines 10 (the second power line 102 and the fourth power line 104) used with negative potential (negative polarity, the same applies hereinafter) are disposed on the second side (+X side).

FIG. 3 is a diagram schematically showing a connection state of cooling pipes 11 in the connector-equipped power supply cable 50.

In FIG. 3, in order to easily understand the connection relationship between the plurality of cooling pipes 11, four power lines 10 of the power supply cable 1 are shown in parallel with equal intervals.

The first power line 101 and the third power line 103 are power lines used with the same polarity (for example, positive potential), and the second power line 102 and the fourth power line 104 are power lines used with the same polarity (for example, negative potential).

In the connection member 70, a connection flow path is formed to communicate the flow paths inside the cooling pipe 11 (inner flow paths) with each other. The inner flow paths of the plurality of cooling pipes 11 are connected to both ends of the connection flow path of the connection member 70. The connection member 70 causes to communicate the inner flow paths of the plurality of cooling pipes 11 with each other by the connection flow path. The connector-equipped power supply cable 50 of the present embodiment includes two connection members 70. Hereinafter, one of them may be referred to as a first connection member 70a, and the other may be referred to as a second connection member 70b.

In the connector-equipped power supply cable 50 shown in FIG. 3, the cooling pipe 11 and the conductor 12 of each power line 10 extend from the first end 1a of the power supply cable 1. Those parts extending from the first end 1a of the power supply cable 1 are accommodated in the connector 40.

The conductors 12 of the two power lines 10 (the first power line 101 and the third power line 103) used at the positive potential are electrically connected to the first connector terminal 42a of the connector 40. The conductors 12 of the two power lines 10 (the second power line 102 and the fourth power line 104) used at the negative potential are electrically connected to the second connector terminal 42b of the connector 40. As described above, in the present embodiment, the first power line 101 and the third power line 103 are positive power lines used at the positive potential. Further, the second power line 102 and the fourth power line 104 are negative power lines used at the negative potential. The first power line 101 (positive power line) and the fourth power line 104 (negative power line) are disposed to sandwich the first communication cord 20 in the radial direction. The third power line 103 (positive power line) and the second power line 102 (negative power line) are disposed to sandwich the first communication cord 20 in the radial direction.

As shown in FIG. 3, the cooling pipes 11 of the power lines 10 are connected to the connection member 70 in the case 41 of the connector 40. In the present embodiment, the cooling pipes 11 of the two positive power lines (the first power line 101 and the third power line 103) are connected to each other through the first connection member 70a. The cooling pipes 11 of the two negative power lines (the second power line 102 and the fourth power line 104) are connected to each other through the second connection member 70b. Thus, the liquid refrigerant sent from the refrigerant cooling device 60 flows toward the connector 40 (the first end 1a side) of the cooling pipe 11 (outward path) of the third power line 103, and passes through the first connection member 70a, and then flows to the cooling pipe 11 (return path) of the first power line 101. Then, the refrigerant is returned to the refrigerant cooling device 60. Similarly, the liquid refrigerant sent from the refrigerant cooling device 60 flows toward the connector 40 (the first end 1a side) of the cooling pipe 11 (outward path) of the second power line 102, and passes through the second connection member 70b, and then flows to the cooling pipe 11 (return path) of the fourth power line 104. Then, the refrigerant is returned to the refrigerant cooling device 60.

In this embodiment, the cooling pipes 11 of the two positive power lines (the first power line 101 and the third power line 103) disposed on the -X side (the first side) with respect to the communication cord columnar section (the symmetry axis C) are connected to each other through the first connection member 70a. The cooling pipes 11 of the two negative power lines (the second power line 102 and the fourth power line 104) disposed on the +X side (the second side) with respect to the communication cord columnar section (the symmetry axis C) are connected to each other through the second connection member 70b.

The above-described power supply cable 1 is configured such that the cooling pipes 11 of the power lines 10 having the same polarity are connected to each other through the connection member 70 at the first end 1a of the power supply cable 1. The power supply cable 1 has a refrigerant flow path in which the inner flow paths of the two cooling pipes 11 connected to each other through the connection member 70 (specifically, the connection flow path). Regarding the two power lines which have the same polarity with each other, the cooling pipe 11 in one power line 10 is connected to the cooling pipe 11 in the other power line 10.

The power supply cable 1 shown in FIG. 3 has two refrigerant flow paths. In one refrigerant flow path, the inner flow paths of the respective cooling pipes 11 of the first power line 101 and the third power line 103 used at the positive potential are continuous through the connection member 70 (specifically, the connection flow path). In the other refrigerant flow path, the inner flow paths of the respective cooling pipes 11 of the second power line 102 and the fourth power line 104 used at the negative potential are continuous through the connection member 70 (specifically, the connection flow path).

Of the two cooling pipes 11 connected to each other through the connection member 70, the power line 10 including one cooling pipe 11 and the power line 10 including the other cooling pipe 11 are used in the same polarity with each other.

One of the pair of cooling pipes 11 connected to each other through the connection member 70 is a refrigerant outward path, and the other is a refrigerant return path.

In FIG. 3, specifically, of the cooling pipes 11 of the first power line 101 and the third power line 103 which are used at a positive potential, the cooling pipe 11 of the first power line 101 is a refrigerant outward path, and the cooling pipe 11 of the third power line 103 is a refrigerant return path.

Further, of the second power line 102 and the fourth power line 104 used at the negative potential, the cooling pipe 11 of the second power line 102 is used as a refrigerant outward path, and the cooling pipe 11 of the fourth power line 104 is used as a refrigerant return path.

As shown in FIG. 3, the cooling pipe 11 of each power line 10 is connected to the refrigerant cooling device 60 at the second end 1b of the power supply cable 1.

One of the pair of cooling pipes 11 connected to each other through the connection member 70 is connected to the refrigerant outlet of the refrigerant cooling device 60, and the other is connected to the refrigerant inlet of the refrigerant cooling device 60. Of the pair of cooling pipes 11 connected to each other through the connection member 70, one connected to the refrigerant outlet of the refrigerant cooling device 60 is used as a refrigerant outward path, and one connected to the refrigerant inlet of the refrigerant cooling device 60 is used as a refrigerant return path.

In the power supply cable 1 shown in FIG. 3, the refrigerant sent from the refrigerant cooling device 60 to the cooling pipe 11 of the refrigerant outward path flows through the cooling pipe 11 of the refrigerant outward path, the connection member 70 connected to the cooling pipe 11 of the refrigerant outward path, and the cooling pipe 11 of the refrigerant return path connected to the connection member 70 in order. The cooling pipe 11 of the refrigerant outward path and the cooling pipe 11 of the refrigerant outward path form a continuous refrigerant flow path through the connection member 70 (specifically, the connection flow path thereof).

Therefore, in the power supply cable 1 shown in FIG. 3, by the refrigerant sent from the refrigerant cooling device 60 to the cooling pipe 11, not only the conductor 12 of the power line 10 where the cooling pipe 11 of the refrigerant outward path is located, but also the conductor 12 of the power line 10 where the cooling pipe 11 of the refrigerant return path is located can also be cooled.

The refrigerant cooling device 60 cools the refrigerant drawn from the cooling pipe 11 of the refrigerant return path connected to the refrigerant inlet, and sends the refrigerant to the cooling pipe 11 of the refrigerant outward path connected to the refrigerant outlet. As shown in FIG. 3, in the power supply cable 1, the cooling pipe 11 of the refrigerant outward path connected to the refrigerant outlet of the refrigerant cooling device 60 and the cooling pipe 11 of the refrigerant return path connected to the refrigerant inlet of the refrigerant cooling device 60 are connected to each other through the connection member 70. The refrigerant sent from the refrigerant cooling device 60 to the cooling pipe 11 of the refrigerant outward path is circulated so as to be returned to the refrigerant cooling device 60 through the cooling pipe 11 of the refrigerant outward path, the connection member 70, and the cooling pipe 11 of the refrigerant outward path.

The conductors 12 in the power line 10 are cooled by the cooling pipe 11 from the inside. Since the conductors 12 are twisted around the cooling pipe 11, the conductors 12 are evenly cooled. Further, the inside of the power line 10 which is a heat generation source inside the power supply cable 1 is evenly cooled. As a result, temperature unevenness in the power supply cable 1 is suppressed, and it is possible to prevent the plurality of power lines 10, the first communication cord 20, the plurality of second communication cords 30, and the like accommodated in the power supply cable 1 from locally becoming high temperature. In addition, it is also possible to prevent the surface of the sheath 4 from locally becoming high temperature.

Further, the power supply cable 1 has flexibility as a whole. Thus, for example, the power supply cable 1 can be easily wound or reeled and accommodated when not in use, and can be released when in use.

The outer diameters of the power lines 10 of the power supply cable 1 are substantially equal to one another. Therefore, the power lines 10 can be shared, and make it possible to reduce the cost. Further, the fact that the outer diameters of the respective power lines 10 are substantially equal also contributes to making the temperature of the surfaces of the power lines 10 uniform and suppressing the temperature unevenness inside and outside the power supply cable 1 more reliably.

A case will be described in which excessive external force applied to the power supply cable 1 causes leakage of liquid refrigerant from the cooling pipe 11 in the connector-equipped power supply cable 50 shown in FIG. 3.

For example, in FIG. 3, the case where the liquid refrigerant leaks from the cooling pipe 11 of either the first power line 101 or the third power line 103 will be considered. The leaked liquid refrigerant flows along the outer peripheral surface of one cooling pipe 11 and the outer surface of the connection member 70, and is transferred to the outer peripheral surface of the other cooling pipe 11. Then, the liquid refrigerant intrudes into the other power line 10. Then, there is a possibility that the first power line 101 and the third power line 103 are electrically connected by the liquid refrigerant. The same applies to the case where dew condensation occurs on the outer peripheral surface of the cooling pipe or the connection pipe, and the two power lines can be electrically connected by the condensed water.

However, in the power supply cable 1 according to the present embodiment, even if the power lines are electrically connected to each other due to the leaked liquid refrigerant or the condensed water as described above, the power lines are used in the same polarity with each other, so an electrical short circuit between the power lines does not occur.

In the power supply cable 1, the configuration in which the cooling pipes 11 of the power lines 10 used in the same polarity with each other are connected to each other through the connection member 70 can reliably prevent a short circuit between the conductors 12 caused by the liquid refrigerant leaked from the cooling pipe 11 and the dew condensation on the outer peripheral surface of the connection member 70.

It should be noted that the technical scope of the present invention is not limited to the above-described embodiments, and various modifications can be made without departing from the spirit of the present invention.

For example, in the above-described embodiment, the configuration in which the cooling pipes of the power lines used in the same polarity with each other are connected by the connection member 70 has been shown. However, for the connection of the cooling pipes 11 of the power lines 10 used in the same polarity with each other at the first end 1a of the power supply cable 1, a configuration not using the connection member 70 can be adopted. For example, a configuration in which a connector for connection may be provided at each first end of the two cooling pipes 11, and the two first ends of the cooling pipes 11 are connected to each other by connecting the connectors for connection may be adopted.

The power supply cable 1 is not limited to the configuration in which the cooling pipes 11 of the power lines 10 of the same polarity are connected to each other through the connection member 70 at the first end 1a side, and a configuration in which the cooling pipes 11 of the power lines 10 of the same polarity are a part of one continuous cooling pipe 11 can be employed. In this configuration, the cooling pipes 11 of the power lines 10 of the same polarity are portions provided in the power lines 10 of one continuous cooling pipe 11. Further, one continuous cooling pipe 11 has a portion extending across the power lines on the first end 1a side.

In the above-described embodiment, as shown in FIG. 1, the power supply cable 1 of the cross-sectional structure is shown. The power supply cable 1 has two sides in the radial direction through the communication code columnar section (symmetry axis C). The power supply cable 1 includes the power lines 10 (the first power line 101 and the third power line 103) used with a positive potential (positive polarity) on the first side, and the power lines 10 (the second power line 102 and the fourth power line 104) used with a negative potential (negative polarity) on the second side.

However, it is also possible to adopt a configuration in which the power supply cable 1 has power lines of the same polarity disposed on both sides of the communication cord columnar section (symmetry axis C). For example, a configuration in which the third power line 103 and the fourth power line 104 in FIG. 1 are replaced may be employed. Even when adopting a configuration in which power lines of the same polarity with each other are disposed on both sides of the communication cord columnar section (symmetry axis C), with respect to the connection of the cooling pipes of the power lines at the first end 1a side, the cooling pipes having the same polarity with each other are connected.

In the above-described embodiment, the configuration including two second communication cords 30 and four power lines 10 has been described. However, the number of second communication cords 30 and the number of power lines 10 accommodated in the sheath 4 may be appropriately changed.

The power supply cable 1 can preferably adopt a configuration in which the number of power lines used at a positive potential (positive polarity) and the number of power lines used at a negative potential (negative polarity) are the same, but a configuration in which the number of power lines used at a positive potential (positive polarity) and the number of power lines used at a negative potential (negative polarity) are different can also be employed.

In the above-described embodiment, the second communication cord 30 and the power line 10 are disposed to surround the first communication cord 20, but the present invention is not limited thereto, and only the power lines 10 may be disposed to surround the first communication cord 20. In this case, the power supply cable 1 is provided with six power lines 10, and the six power lines 10 may be disposed to surround the second communication cord 30 in a cross-sectional view.

The power supply cable 1 is not limited to the configuration having the communication cord columnar section, and a configuration not having the communication cord columnar section may be employed.

Although the above-described embodiment shows the configuration in which the refrigerant sent from the refrigerant cooling device to the cooling pipe of the refrigerant outward path is circulated back to the refrigerant cooling device through the connection pipe and the cooling pipe of the refrigerant return path, the present invention is not limited thereto. Of the cooling pipe of the refrigerant outward path and the cooling pipe of the refrigerant return path which are connected to each other through the connection pipe, the cooling pipe of the refrigerant return path may not be connected to a refrigerant cooling device. It is also possible to adopt a configuration in which the refrigerant sent from the refrigerant cooling device to the cooling pipe of the refrigerant outward path flows into the cooling pipe of the refrigerant return path from the connection pipe and is discharged out of the power supply cable 1 without returning to the refrigerant cooling device from the refrigerant return path.

In addition, without departing from the spirit of the present invention, it is possible to appropriately replace the constituent elements in the above-described embodiment with well-known constituent elements, and the above-described embodiment and modification examples may be appropriately combined.

### Reference Signs List

- 1: power supply cable
- 1a: first end
- 2: filling
- 4: sheath
- 10: power line
- 101, 103: positive power line
- 102, 104: negative power line
- 11: cooling pipe
- 12: conductor
- 12a: strand
- 12b: conductor wire
- 13: insulator
- 20: first communication cord
- 21: first signal line
- 22: tape
- 23: coating
- 30: second communication cord
- 31: second signal line
- 32: tape
- 40: connector
- 50: connector-equipped power supply cable
- 60: refrigerant cooling device
- 70: connection member

## Claims

1. A power supply cable comprising:
a plurality of power lines each having a cooling pipe and a conductor that surrounds the cooling pipe,
wherein each cooling pipe that is included in each of power lines used in the same polarity is connected to each other at a first end of the power supply cable.

2. The power supply cable according to claim 1, further comprising:
a first communication cord having a first signal line and a coating that accommodates the first signal line inside,
wherein the plurality of power lines include a positive power line used at a positive potential and a negative power line used at a negative potential, and
wherein in a cross-sectional view, the positive power line and the negative power line are disposed so as to sandwich the first communication cord therebetween in a radial direction.

3. The power supply cable according to claim 2, further comprising:
a second communication cord having a second signal line and an exterior material that covers the second signal line,
wherein in the cross-sectional view, the plurality of power lines are disposed on each of the two sides of a columnar section which includes the first communication cord and the second communication cord, and the plurality of power lines sandwich the columnar section therebetween in the radial direction.

4. A connector-equipped power supply cable comprising:
the power supply cable according to any one of claims 1 to 3; and
a connector that is provided at the first end of the power supply cable, and is connected to a power supply target.

5. A power supply cable comprising:
a plurality of power lines each having a cooling pipe,
wherein the cooling pipe included in one power line of the plurality of power lines is connected to the cooling pipe included in the other power line of the plurality of power lines, and
wherein the one power line and the other power line are used in the same polarity with each other.
